# EUROPEAN PATENT APPLICATION

(11) **EP 3 594 642 A1**
(43) Date of publication of application: **15.01.2020**
(21) Application number: 19184865.4
(22) Date of filing: 08.07.2019
(51) Int. Cl.: G01J 3/02, G01J 3/18, G01J 3/28

(54) **IMAGING SPECTOGRAPH UTILIZING THE ZERO ORDER OF THE DIFFRACTION GRATING**

(30) Priority: 11.07.2018 CZ 20180346
(71) Applicant: Univerzita Palackého v Olomouci, 771 47 Olomouc (CZ); Meopta - optika, s.r.o., 750 02 Prerov (CZ); ZEBR s.r.o., 691 88 Milovice (CZ)
(72) Inventor: Kapitan, Josef, 785 01 Sternberk (CZ); Vacula, Daniel, 768 23 Brest (CZ); Pochyly, Antonin, 750 02 Prerov (CZ); Kyvalsky, Jiri, 750 02 Prerov (CZ); Zelinka, Frantisek, 691 88 Milovice (CZ); Vlcek, Jan, 691 81 Brezi (CZ)
(74) Representative: Musil, Dobroslav

(57) **Abstract**

The present invention relates to an imaging spectrograph utilizing the zero order of the diffraction grating (2) and comprising an entrance aperture (0), behind which a collimating optical system (1) is arranged in the direction of the radiation, behind which is arranged a primary diffraction grating (2), which is associated with a primary focusing optical system (3), behind which a primary detector (4) of radiation is arranged. A secondary diffraction grating (5) is arranged in the direction of the radiation which has passed through the zero order of the primary diffraction grating (2) and/or has been reflected from the zero order of the primary diffraction grating (2) and is directed outside the primary focusing optical system (3), whereby the secondary diffraction grating (5) is associated with a secondary focusing optical system (6) behind which a secondary radiation detector (7) is arranged.

## Description

### Technical field

The present invention relates to an imaging spectrograph using a zero order of diffraction grating and comprising an entrance aperture behind which, in the direction of radiation, is arranged a collimating optical system behind which is arranged a primary diffraction grating which is associated with a primary focusing optical system behind which a primary radiation detector is arranged.

### Background art

At present, spectrographs used to detect the incident electromagnetic radiation differentiated according to wavelengths contain following optical elements: an aperture for incoming polychromatic, usually divergent radiation beam, e.g. a slit; a collimating element which converts the divergent optical beam coming from the entrance aperture into a collimated beam; a dispersive element, generally an element causing refractive or diffractive angular dispersion of a polychromatic beam into monochromatic beams according to wavelengths; a focusing element, which generates an image of the entrance aperture - usually a slit - at the focal plane of the exit aperture, usually on the flat multi-channel radiation detector, in order to record simultaneously the radiation of a large number of wavelengths. The dispersive element is most often a diffraction grating or a dispersive prism.

The primary objective of a spectrograph optical system design is to achieve the highest possible value of the radiation flux incident on the detector, as well as compliance with other system parameters, such as spectral resolution and the recorded spectral range. It can be proven that the radiation flux is proportional to the étendue of the optical system of the spectrograph, which is determined, for example, as the product of the normal surface of the beam incident on the collimating element S and the spatial angle Ω at which the entrance aperture, e.g. a slit, is seen from this normal surface, (étendue for the individual elements of a well-designed optical system is conserved), transmittance of the spectrograph optical system τ, and the spectral radiance of the examined radiation source *B_{λ}*. Thus, it is possible to proceed in two ways in increasing the efficiency (radiation flux incident on the detector). It is possible to either increase the étendue of the spectrograph, e.g., by using optical assemblies having a higher luminosity (numerical aperture) or to increase the transmittance of the optical system, for example by using optical materials with higher trasmittance, more efficient reflective or anti-reflective surfaces, a diffraction grating with higher efficiency, etc. Spectrographs with the highest étendue currently available use highly efficient transmission diffraction gratings and lens objectives which collimate and focus the optical beam mainly due to better correction of optical defects and hence higher lens speed than mirror systems. In the visible and near-infrared spectral range, these systems achieve f-number (ratio of the system's focal length to the diameter of the entrance pupil) of f/1.8 to f/1.4. However, in practice, increasing étendue does not in itself increase the radiation flux incident on the detector automatically, unless this étendue is effectively matched by the radiation source. From the point of view of the transmittance of the optical system, it is often the efficiency of the diffraction grating that is the limiting element, since only a part of the radiation is diffracted to the desired diffracted order.

US 20130169959 A1 discloses a system for increasing light collection in a spectrometer comprising a detector and a processor. The detector detects zero order light from a diffractive element of the spectrometer and measures light intensity from this zero-order. The processor continuously receives the results of the radiation intensity measurements from the detector and automatically adjusts the spectrometer parameters, until the detector receives measurements of maximum intensity. An automatically adjusted spectrometer parameter may include an optical path between the spectrometer entrance and the sample, the spectrometer exposure time, or the light source intensity for the spectrometer. The optical path between the spectrometer aperture and the sample may be adjusted by moving the spectrometer objective relative to the sample or by moving the sample relative to the spectrometer.

CN 102812340 A describes a micro-spectrometer which is capable of receiving a zero order spectral component and the first order spectral component, comprising an input compartment for receiving optical signals, a diffraction grating and an optical sensor. The diffraction grating has a curved focusing surface and a diffraction pattern formed thereon. The diffraction grating receives optical signals and separates them into a plurality of spectral components, including the zero order spectral component and the first order spectral component. The optical sensor has a first sensing section and a second sensing section and receives the isolated spectral components focused by the diffraction grating. The first sensing section receives the zero order spectral component, whereas the second sensing portion receives the first order spectral component.

US4351611 discloses an optical system for detecting particles in which a diffraction grating is used, whereby the zero order radiation is used for imaging of the detection zone.

In neither of these inventions, radiation from the zero order of the diffraction grating is utilized for further spectral analysis, but only for the detection of total intensity or for optical imaging of the entrance aperture (zone).

The aim of the invention is to improve the efficiency of the detection of the radiation spectrum or to extend the spectral range while maintaining the input étendue of the optical system and maintaining the spectral resolution. The invention allows the use of a spectrograph even for multichannel detectors and allows the spectrograph to change the wavelength range merely by rotating the diffraction grating and by making a small change in the position and orientation of the detector (focusing the detector).

### Principle of the invention

The aim of the invention is achieved by an imaging spectrograph utilizing the zero order of the diffraction gratings for spectral detection, whose principle consists in the fact that a secondary diffraction grating is arranged in the direction of the radiation which has passed through the zero order of the primary diffraction grating and/or has been reflected from the zero order of the primary diffraction grating and directed outside the primary focusing optical system, the secondary diffraction grating being associated with a secondary focusing optical system behind which a secondary detector of radiation is arranged.

The spectrograph according to the invention achieves higher efficiency of the detection of the radiation spectrum while maintaining the input étendue of the optical system either by increasing the detection sensitivity or by extending the recorded spectral range. The spectrograph can be used for multichannel detectors; it allows changing the wavelength range, merely by rotating the diffraction grating and by making a small change in the position and orientation of the detector, i.e., focusing the detector.

### Description of drawings

The invention is represented in a drawing, wherein Fig. 1 shows the currently used construction of the spectrograph, which is an initial state for the spectrograph according to the present invention, Fig. 2 shows a first exemplary embodiment of the spectrograph according to the present invention, Fig. 2a shows a solution of Fig. 2 supplemented with polarizing optics between the primary and secondary blocks and Fig. 3 shows a second exemplary embodiment of the spectrograph according to the present invention.

### Examples of embodiment

The invention will be described with reference to exemplary embodiments of a high-resolution imaging spectrograph, using radiation diffraction into zero and first diffraction orders, with a diffraction grating **2** and a detector of radiation **4.**

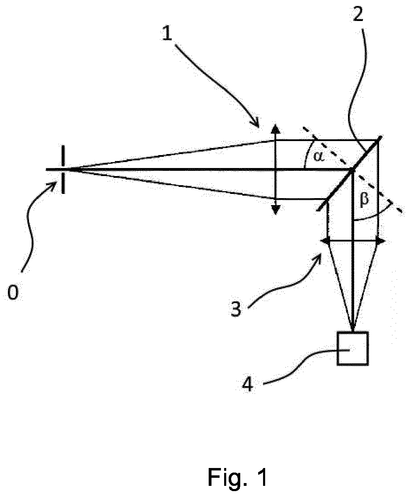

The spectrograph comprises an input primary block **A**, which is adjoined by a secondary block **B**. The primary block A contains an aperture 0 (slit) at the input of the radiation source (not shown), behind which a collimating optical system **1** and a primary diffraction grating **2** are located in the direction of the radiation. The analyzed radiation is incident on the primary diffraction grating **2** at an angle **α₁**. Behind the diffraction grating **2**, in the direction **β₁** of the primary diffraction of radiation by the primary diffraction grating **2** is situated a primary focusing optical system **3,** which focuses the primary diffracted radiation to the primary detector **4** of radiation. The arrangement of the primary block **A** shown in Fig. 1 represents a spectrograph known from the background art.

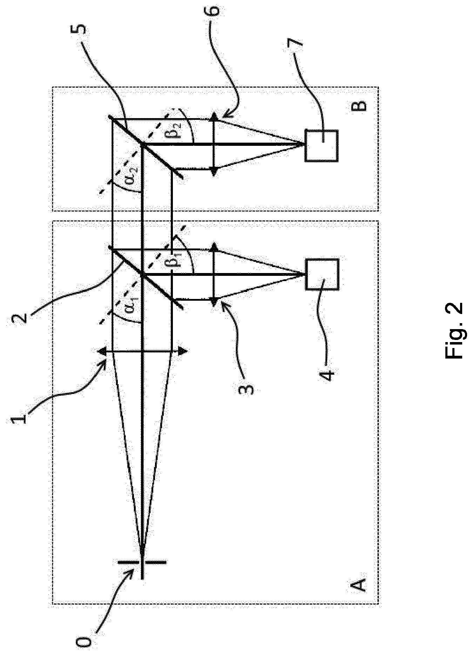

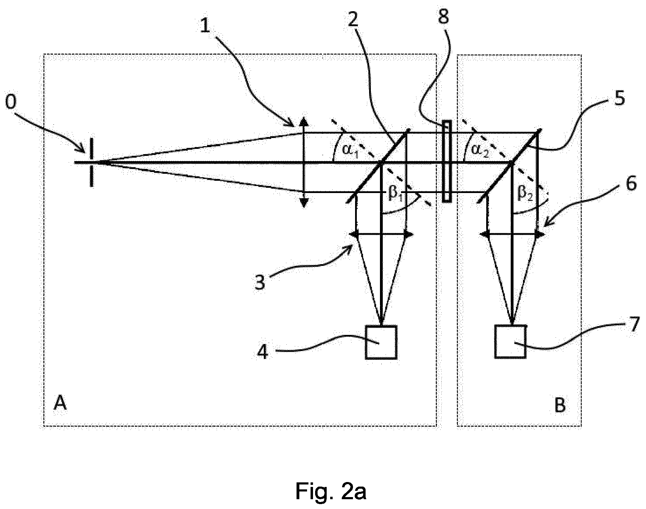

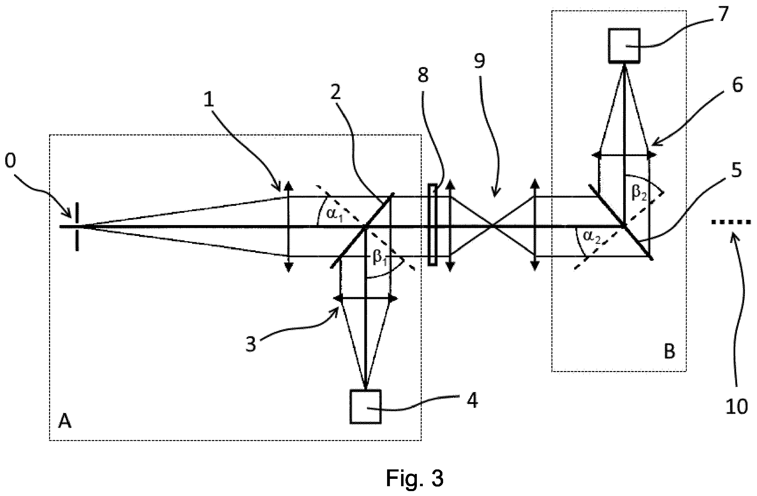

As shown in Figs. 2, 2a and 3, the spectrograph according to the present invention is further provided with a secondary block **B,** which adjoins the primary block **A** in the direction of the radiation which has passed through the primary diffraction grating **2** and/or has been reflected from the primary diffraction gratings **2** without being utilized for the detection in the primary block **A.** This portion of radiation - the radiation passing through and/or the radiation reflected substantially constitutes an unused portion of the input radiation from the radiation source being analyzed.

The secondary block **B** comprises a secondary diffraction grating **5** on which the analyzed radiation falls at an angle **α₂.** Behind the secondary diffraction grating **5,** in the direction **β₂** of the secondary radiation diffraction performed by the secondary diffraction grating **5,** is located a secondary focusing optical system **6,** which focuses the secondary diffracted radiation to the secondary radiation detector **7.**

The secondary block **B** records the radiation spectrum that is either the same or different from the radiation spectrum recorded by the primary block **A.** If the secondary block **B** records the same spectral region as the primary block **A,** the detection efficiency of the entire spectrograph is increased. If the secondary block **B** records a different spectral region than the primary block **A,** the spectral range of the spectrograph increases without loss of spectral resolution. Thus, the spectrograph according to the invention uses more effectively the analyzed radiation which is diffracted into the zero (or other) diffraction order and would not be utilized after passing through the primary diffraction grating **2** and/or after being reflected from the primary diffraction grating **2,** whereby this secondary radiation is further diffracted by an additional diffraction grating (secondary diffraction grating **5,** tertiary, etc.) in at least one additional block and thus further diffracted radiation is focused by an additional optical system (secondary **6,** tertiary, etc.) to an additional detector (secondary **7,** tertiary, etc.).

In the embodiment of Fig. 2a, a polarizing optical system **8,** which is adapted to adjust the polarization state of radiation so as to maximize the diffraction efficiency on the secondary diffraction grating **5,** is located in the radiation path from the primary block **A** to the secondary block **B.** Basically, the polarizing optical system **8** is an optional component of the embodiment of Fig. 2a, as follows from the comparison with the embodiment of Fig. 2.

In the embodiment of Fig. 3, arranged in the path of the radiation from the primary block A to the secondary block B is an optical system **9** which is adapted to image a plane in the primary diffraction grating **2** in the space of the secondary diffraction grating **5** or to display the exit pupil of the collimating objective 1 at the entrance pupil of the focusing objective **6** thereby minimizing the vignetting of the off-axis radiation beams. An embodiment of such an optical system **9** is a 4-f optical system comprising a pair of photographic objectives focused at infinity with a common focal plane. In the exemplary embodiment of Fig. 3, a polarizing optical system **8** is arranged in front of the optical system 9, the polarizing optical system **8** being adapted to adjust the polarization state of the radiation in order to maximize the diffraction efficiency on the secondary diffraction grating **5.** Basically, the polarizing optical system **8** is an optional component of the embodiment of Fig. 3.

In an exemplary embodiment (not shown), behind the secondary block **B** is arranged at least one additional block comprising another diffraction grating, on which the analyzed radiation falls at a determined angle and behind which a further focusing objective is located in the determined direction of secondary diffraction of the radiation performed by the additional diffraction grating, whereby this additional focusing objective focuses the additional diffracted radiation to another radiation detector, as is indicated by dots **10** in Fig. 3. Thus, the spectrograph can be supplemented with at least one additional block or several additional blocks comprising additional diffraction gratings, additional focusing optical systems and additional detectors, which use the analyzed radiation which has not been used by the preceding blocks with preceding diffraction gratings, focusing optical systems and detectors.

It is obvious that according to the present invention, in addition to transmission diffraction gratings and optical systems in the form of lens objectives, mirror objectives and/or reflective diffraction gratings can be used in the spectrograph construction.

A particular device in which the present invention may be used is, for example, an optical system using Echelle diffraction grating as a first diffraction element (primarily used at high diffraction orders), where a substantial portion of the radiation is diffracted (reflected) into the zero diffraction order and it is subsequently used by the subsequent blocks according to the invention.

### Industrial applicability

The invention can be applied in high-resolution imaging spectrographs for Raman spectroscopy, astronomy, space research, atomic physics and other fields. Spectrographs with the applied invention can be produced in an industrial scale.

## Claims

1. An imaging spectrograph utilizing the zero order of the diffraction grating and comprising an entrance aperture (0), behind which a collimating optical system (1) is arranged in the direction of radiation, behind which is arranged a primary diffraction grating (2), which is associated with a primary focusing optical system (3), behind which a primary detector (4) of radiation is arranged, **characterized in that** a secondary diffraction grating (5) is arranged in the direction of the radiation which has passed through the zero order of the primary diffraction grating (2) and/or has been reflected from the zero order of the primary diffraction grating (2) and is directed outside the primary focusing optical system (3), whereby the secondary diffraction grating (5) is associated with a secondary focusing optical system (6) behind which a secondary radiation detector (7) is arranged.

2. The imaging spectrograph according to claim 1, **characterized in that** at least one additional diffraction grating is arranged in the direction of the radiation which has passed through the secondary diffraction grating (5) in the zero order and/or has been reflected from the secondary diffraction grating (5) in the zero order and is directed outside the secondary focusing system (6), whereby the additional diffraction grating is associated with a focusing optical system behind which another radiation detector is arranged.

3. The imaging spectrograph according to claim 1 or 2, **characterized in that** in front of the secondary diffraction grating (5) and each additional diffraction grating, a polarizing optical system (8) is arranged adapted to adjust the polarization state of the radiation to maximize the efficiency of the subsequent diffraction grating (5).

4. The imaging spectrograph according to any of claims 1 to 3, **characterized in that** in front of the secondary diffraction grating (5) and each additional diffraction grating, an optical system (9) is arranged, adapted to image the plane in the space of the preceding diffraction grating onto the plane in the space of the following diffraction grating or to display the exit pupil of the collimating objective (1) on the entrance pupil of the focusing objective (6).
